# EUROPÄISCHE PATENTSCHRIFT

(11) **EP 3 024 366 B1**
(45) Veröffentlichungstag und Bekanntmachung des Hinweises auf die Patenterteilung: **20.09.2017**
(21) Anmeldenummer: 15707576.3
(22) Anmeldetag: 20.02.2015
(51) Int. Cl.: A47J 43/07

(54) **LEBENSMITTELZERKLEINERUNGSEINRICHTUNG**
FOOD COMMINUTING DEVICE
DISPOSITIF DE BROYAGE DE DENRÉES ALIMENTAIRES

(30) Priorität: 07.03.2014 DE 102014204262
(43) Veröffentlichungstag der Anmeldung: 01.06.2016
(73) Patentinhaber: Genius GmbH, 65549 Limburg (DE)
(72) Erfinder: REPAC, Cedomir, 65611 Brechen (DE)
(74) Vertreter: Grabovac, Dalibor
(86) Internationale Anmeldenummer: PCT/EP2015/053575
(87) Internationale Veröffentlichungsnummer: WO 2015/132081

(56) Entgegenhaltungen:
- WO-A1-00/24302
- DE-C1- 3 225 591
- GB-A- 1 422 701
- JP-U- H01 138 339
- KR-A- 20130 059 522
- US-B1- 7 318 666

## Beschreibung

Die Erfindung betrifft eine Lebensmittelzerkleinerungseinrichtung mit einem Zerkleinerer, der mit einer Antriebseinheit und einem Aufnahmebehälter koppelbar ist, wobei die Lebensmittelzerkleinerungseinrichtung wenigstens ein bewegbares Koppelmittel aufweist, das an dem Zerkleinerer angebracht ist, wobei sich das Koppelmittel im gekoppelten Zustand des Aufnahmebehälters mit dem Zerkleinerer in einer ersten Stellung und im ungekoppelten Zustand in einer zweiten Stellung befindet und die erste Stellung des Koppelmittels einer Antriebsauslösestellung entspricht, in der ein Antreiben einer Schneideinheit der Lebensmittelzerkleinerungseinrichtung durch die Antriebseinheit möglich ist, wobei die Antriebseinheit durch die Lebensmittelzerkleinerungseinrichtung aktivierbar ist.

Aus dem Stand der Technik ist eine Vielzahl von unterschiedlich ausgebildeten Lebensmittelzerkleinerungsvorrichtungen bekannt, die einen Aufnahmebehälter zum Aufnehmen von Lebensmitteln, eine Zerkleinerungseinrichtung, die Schneidmittel zum Zerkleinern von Lebensmitteln besitzt, und eine Antriebseinheit zum Antreiben der Zerkleinerungseinrichtung aufweisen. Die Zerkleinerungseinrichtung erstreckt sich durch eine Öffnung in einem Aufnahmebehälterboden und kann an dem aus dem Aufnahmebehälterboden ragenden Ende mit der Antriebseinheit gekoppelt werden. Der Aufnahmebehälter wird mit einem von der Zerkleinerungseinrichtung separaten Deckel verschlossen.

Zudem sind Lebensmittelzerkleinerungsvorrichtungen bekannt, bei denen im Aufnahmebehälterboden keine Öffnung für die Zerkleinerungseinrichtung vorgesehen ist, sondern die Zerkleinerungseinrichtung neben ihrer Zerkleinerungsfunktion auch als Verschluss für die Behälteröffnung des Aufnahmebehälters fungiert. Nach einem Einfüllen des Aufnahmebehälters mit Lebensmitteln wird dieser durch die Zerkleinerungseinrichtung verschlossen und die Zerkleinerungseinrichtung wird mit der Antriebseinheit gekoppelt. Zum Koppeln der Zerkleinerungseinrichtung mit der Antriebseinheit wird die Zerkleinerungseinrichtung auf die Antriebseinheit gesetzt. Dies bedeutet, dass im aufgesetzten Zustand der Zerkleinerungseinrichtung auf der Antriebseinheit die Zerkleinerungseinrichtung als Boden des Aufnahmebehälters fungiert und ein Entweichen der in dem Aufnahmebehälter befindlichen Lebensmittel verhindert.

Ein Zerkleinern der in dem Aufnahmebehälter befindlichen Lebensmittel erfolgt, wenn auf den Aufnahmebehälter und die Zerkleinerungsvorrichtung eine zur Antriebseinheit gerichtete Kraft ausgeübt wird. In diesem Fall werden auf dem Aufnahmebehälter vorgesehene Vorsprünge gegen Schaltelemente der Antriebseinheit gedrückt, wodurch die Schaltelemente in eine Einschaltstellung umgeschaltet werden, in der die Antriebseinheit aktiviert ist. Die aktivierte Antriebseinheit treibt die Schneidmittel an, so dass ein Zerkleinern der in dem Aufnahmebehälter befindlichen Lebensmittel erfolgt.

Nachteilig an der letzteren der beiden zuvor diskutierten bekannten Lebensmittelzerkleinerungsvorrichtungen ist, dass nur Aufnahmebehälter eingesetzt werden können, die an der der Zerkleinerungseinrichtung zugewandten Seite den gleichen Außendurchmesser aufweisen. Dies ergibt sich, da andernfalls die an den Aufnahmebehältern angebrachten Vorsprünge nicht in Kontakt mit den an der Antriebseinheit vorgesehenen Schaltelementen gelangen können und somit die Antriebseinheit nicht aktiviert werden kann. Somit ist der Einsatzbereich der Lebensmittelzerkleinerungsvorrichtung auf eine geringe Anzahl von Aufnahmebehälterformen begrenzt.

Das Dokument US 7,318,666 B1 offenbart eine Lebensmittelzerkleinerungsvorrichtung.

Die Aufgabe der Erfindung besteht daher darin, eine Lebensmittelzerkleinerungsvorrichtung bereitzustellen, in der unterschiedlich ausgebildete Aufnahmebehälter eingesetzt werden können.

Diese Aufgabe wird durch eine Lebensmittelzerkleinerungseinrichtung der eingangs genannten Art gelöst, die dadurch gekennzeichnet ist, dass das Koppelmittel in der ersten Stellung von einer Außenseite des Zerkleinerers in radialer Richtung nach außen hervorsteht und das Koppelmittel in der zweiten Stellung von einer Innenseite des Zerkleinerers in radialer Richtung nach innen hervorsteht.

Durch das Anbringen des bewegbaren Koppelmittels an dem Zerkleinerer kann eine Vielzahl von unterschiedlich ausgebildeten Aufnahmebehältern mit der Lebensmittelzerkleinerungseinrichtung gekoppelt werden. Insbesondere ist der Einsatz nicht auf Aufnahmebehälter beschränkt, die an der der Lebensmittelzerkleinerungseinrichtung zugewandten Seite einen bestimmten Außendurchmesser aufweisen. Im Ergebnis fungiert die Lebensmittelzerkleinerungseinrichtung als ein Adapter zum Koppeln von unterschiedlich ausgebildeten Aufnahmebehältern mit der Antriebseinheit.

Die Koppelmittel können relativ zu dem Zerkleinerer bewegt werden. Der Zerkleinerer kann, insbesondere in einer Aufnahme der Antriebseinheit während des Betriebs der Antriebseinheit, ortsfest angeordnet sein. Die Lebensmittelzerkleinerungseinrichtung kann unmittelbar mit dem Aufnahmebehälter und/oder mit der Antriebseinheit gekoppelt werden. Im Betrieb ist die Antriebseinheit auf den Boden gesetzt. Die Lebensmittelzerkleinerungseinrichtung kann entlang einer Mittelachse von der Lebensmittelzerkleinerungsvorrichtung gesehen oberhalb eines Antriebsmotors der Antriebseinheit angeordnet sein. Der Aufnahmebehälter kann entlang der Mittelachse der Lebensmittelzerkleinerungsvorrichtung gesehen oberhalb der Lebensmittelzerkleinerungseinrichtung angeordnet sein. Der Aufnahmebehälter, die Antriebseinheit und die Lebensmittelzerkleinerungseinrichtung können derart angeordnet sein, dass deren Mittelachsen koaxial zueinander verlaufen.

Durch das Ausbilden des Koppelmittels derart, dass dieses wenigstens zwei Stellungen einnehmen kann, ist es möglich, unterschiedlichen Stellungen des Koppelmittels unterschiedliche Betriebszustände der Antriebseinheit zuzuordnen. So entspricht die erste Stellung des Koppelmittels einer Antriebsauslösestellung, in der ein Antreiben einer Schneideinheit der Lebensmittelzerkleinerungseinrichtung durch die Antriebseinheit möglich ist. Zusätzlich kann die zweite Stellung des Koppelmittels einer Sicherheitsstellung entsprechen, in der ein Antreiben der Schneideinheit der Lebensmittelzerkleinerungseinrichtung durch die Antriebseinheit nicht möglich ist.

Das Vorsehen einer Antriebsauslösestellung der Koppelmittel ermöglicht, dass die Lebensmittelzerkleinerungseinrichtung zum Aktivieren der Antriebseinheit eingesetzt werden kann, im Gegensatz zu den bekannten Lebensmittelzerkleinerungsvorrichtungen, bei denen die Aktivierung der Antriebseinheit durch den Aufnahmebehälter erfolgt. Das Vorsehen der Sicherheitsstellung bietet den Vorteil, dass durch die Lebensmittelzerkleinerungseinrichtung selbst sichergestellt ist, dass sich ein Benutzer der Lebensmittelzerkleinerungsvorrichtung bei einer unsachgemäßen Benutzung von dieser nicht verletzen kann.

Insbesondere ist ein Aktivieren der Antriebseinheit und somit eine Verletzung des Benutzers an einer Schneideinheit der Lebensmittelzerkleinerungseinrichtung nicht möglich, wenn die Lebensmittelzerkleinerungseinrichtung in die Aufnahme der Antriebseinheit gesetzt ist und mit dem Aufnahmebehälter nicht gekoppelt ist. Dies bedeutet, dass bei einem Vorsehen des Koppelmittels in der Sicherheitsstellung es ausgeschlossen ist, dass die Antriebseinheit aktiviert werden kann, wenn die Lebensmittelzerkleinerungseinrichtung mit der Antriebseinheit gekoppelt ist.

In einer bevorzugten Ausführung kann das Koppelmittel an dem Zerkleinerer, insbesondere über ein Gelenk, drehbar angebracht sein. Alternativ kann das Koppelmittel derart mit dem Zerkleinerer verbunden sein, dass sich das Koppelmittel relativ zu dem Zerkleinerer linear bewegt.

Der Zerkleinerer kann tassenförmig ausgebildet sein. Insbesondere kann der Zerkleinerer eine im Achsnormalquerschnitt, insbesondere ringförmig, ausgebildete Zerkleinererwand und einen Zerkleinererboden aufweisen. Die Zerkleinererwand begrenzt eine Zerkleinereraussparung, die als Aufnahme für den Aufnahmebehälter dienen kann. Dabei weist der Zerkleinerer, insbesondere die Zerkleinererwand, eine Außenseite und eine Innenseite auf, wobei die Innenseite zu einer Mittelachse des Zerkleinerers näher angeordnet ist als die Außenseite. In der Zerkleinererwand kann wenigstens ein Durchbruch vorgesehen sein, in dem das Koppelmittel wenigstens teilweise angeordnet ist.

Das Koppelmittel steht in der zweiten Stellung von der Innenseite des Zerkleinerers in radialer Richtung hervor. Insbesondere kann das Koppelmittel von der Innenseite nach innen, also in Richtung zu der Mittelachse des Zerkleinerers hervorstehen. Durch das Vorstehen des Koppelmittels von der Innenseite ist auf einfache Weise sichergestellt, dass bei einem Einführen des Aufnahmebehälters in den Zerkleiner, insbesondere in die durch die Zerkleinererwand definierte Zerkleinereraussparung, der Aufnahmebehälter mit dem Koppelelement in, insbesondere unmittelbaren, Kontakt gelangt.

Der Aufnahmebehälter kann beim Koppeln mit dem Zerkleinerer, insbesondere beim Einführen des Aufnahmebehälters in den Zerkleinerer, mit einem ersten Koppelabschnitt des Koppelmittels in, insbesondere unmittelbaren, Kontakt gelangen. Der erste Koppelabschnitt des Koppelmittels kann bezogen auf die Einführbewegungsrichtung des Aufnahmebehälters und/oder die Erstreckung der Mittelachse des Zerkleinerers schräg ausgebildet sein.

Der Aufnahmebehälter, insbesondere ein vom Aufnahmebehälter vorragender Vorsprung, kann beim Einführen in den Zerkleinerer mit dem ersten Koppelabschnitt in Kontakt gelangen und auf diesen eine Kraft ausüben derart, dass sich das Koppelelement bewegt, insbesondere in radialer Richtung. Dadurch ist einerseits eine Bewegung des Koppelmittels auf einfache Weise realisiert, andererseits ist durch den schräg ausgebildeten Koppelabschnitt das Einbringen des Aufnahmebehälters in den Zerkleinerer geführt.

Das Koppelmittel steht in der ersten Stellung von der Außenseite des Zerkleinerers in radialer Richtung nach außen, also ausgehend von der Außenseite des Zerkleinerers in eine Richtung weg von der Mittelachse des Zerkleinerers, hervor. Durch das Vorstehen des Koppelmittels von der Außenseite des Zerkleinerers ist sichergestellt, dass ein Schaltelement der Antriebseinheit durch das Koppelelement kontaktiert werden kann, wenn die Lebensmittelzerkleinerungseinrichtung mit der Antriebseinheit gekoppelt ist. Die erste Stellung bzw. Antriebsauslösestellung des Koppelmittels erlaubt somit, dass ein Aktivieren der Antriebseinheit durch die Lebensmittelzerkleinerungseinrichtung überhaupt möglich ist.

Das Koppelmittel kann aus einem anderen Material bestehen wie der Zerkleinerer. Insbesondere kann das Koppelmittel aus einem Material bestehen, dass eine höhere Bruchfestigkeit aufweist als das Material des Zerkleinerers. Das Vorsehen eines bruchfesten Materials für das Koppelmittel verringert die Gefahr, dass dieses bricht, wenn das Koppelmittel gegen das Schaltelement der Antriebseinheit gedrückt wird.

Die Lebensmittelzerkleinerungseinrichtung kann ein Spannmittel aufweisen, das mit dem Koppelmittel verbunden ist. Das Spannmittel, insbesondere eine Feder, kann nach einem Entkoppeln des Aufnahmebehälters von dem Zerkleinerer eine Rückbewegung des Koppelmittels von der ersten Stellung in die zweite Stellung bewirken. Durch das Vorsehen des Spannmittels kann auf einfache Weise sichergestellt werden, dass sich das Koppelmittel im ungekoppelten Zustand der Lebensmittelzerkleinerungseinrichtung mit dem Aufnahmebehälter und ohne ein Einwirken des Benutzers immer in der zweiten Stellung befindet. Somit stellt das Spannmittel im Ergebnis sicher, dass in einem ungekoppelten Zustand der Lebensmittelzerkleinerungseinrichtung diese nicht in der Lage ist, eine Aktivierung der Antriebseinheit zu bewirken, wodurch eine Verletzungsgefahr für den Benutzer ausgeschlossen ist.

In einer bevorzugten Ausführung kann die Lebensmittelzerkleinerungseinrichtung an einer ersten Seite mit dem Aufnahmebehälter und an einer, insbesondere einer der ersten Seite gegenüberliegenden, zweiten Seite mit der Antriebseinheit, insbesondere unmittelbar, gekoppelt sein. Die Kopplung des Aufnahmebehälters mit dem Zerkleinerer kann durch eine form- und/oder reibschlüssige Verbindung erfolgen. Insbesondere kann die Kopplung durch eine Gewindeverbindung realisiert werden, wobei der Aufnahmebehälter an seinem dem Zerkleinerer zugewandten koppelbaren Abschnitt ein Außengewinde und einen von einer Behälterwand vorragenden Vorsprung aufweist. Das Außengewinde des Aufnahmebehälters kann mit einem Innengewinde des Zerkleinerers gekoppelt werden, wobei das Innengewinde an der Innenseite der Zerkleinererwand des Zerkleinerers vorgesehen sein kann.

Die Lebensmittelzerkleinerungseinrichtung kann eine Schneideinheit aufweisen. Die Schneideinheit kann eine Antriebswelle aufweisen, die mit wenigstens einem Schneidmittel, insbesondere unmittelbar, verbunden ist und an dem vom Schneidmittel abgewandten Ende mit der Antriebseinheit koppelbar ist. Die Kopplung der Lebensmittelzerkleinerungseinrichtung, insbesondere der Antriebswelle, mit der Antriebseinheit kann über eine form- und/oder reibschlüssige Verbindung erfolgen. Insbesondere kann die Kopplung über eine Klauenkupplung erfolgen. Das Schneidmittel kann in der Zerkleinereraussparung untergebracht sein. Im Ergebnis ist eine einfache Kopplung der Lebensmittelzerkleinerungseinrichtung mit dem Aufnahmebehälter und/oder der Antriebseinheit möglich.

In einer bevorzugten Ausführung kann bei einem Koppeln des Aufnahmebehälters mit der Lebensmittelzerkleinerungseinrichtung der Aufnahmebehälter das Koppelmittel in die erste Stellung überführen. Insbesondere kann das Koppelmittel in die erste Stellung überführt werden, wenn der Aufnahmebehälter in den Zerkleinerer, insbesondere die Aussparung des Zerkleinerers, eingeführt und/oder mit dem Zerkleinerer verschraubt wird. Dazu kann der von der Behälterwand des Aufnahmebehälters vorragende Vorsprung in Kontakt mit dem ersten Koppelabschnitt des Koppelelements gelangen und das Koppelmittel verschieben. Es ist neben dem Aufnahmebehälter somit keine weitere Einrichtung notwendig, mittels der das Koppelmittel in die erste Stellung überführt werden kann, wodurch die Nutzung der gesamten Lebensmittelzerkleinerungsvorrichtung einfach ist.

Die Antriebseinheit kann eine Aufnahme zum Aufnehmen der Lebensmittelzerkleinerungseinrichtung aufweisen. Diese kann unabhängig von der Stellung des Koppelmittels in die Aufnahme eingeführt werden. Damit dies auch bei einer Lebensmittelzerkleinerungseinrichtung mit in erster Stellung befindlichen Koppelmitteln möglich ist, kann das in der Antriebseinheit, insbesondere in einer Aufnahmebehälterwand der Antriebseinheit, vorgesehene Schaltelement um einen vorgegebenen Abstand von einer der Lebensmittelzerkleinerungseinrichtung zugewandten Stirnseite der Antriebseinheit versetzt angeordnet sein. Im Ergebnis ist durch das Vorsehen einer Aufnahme in der Antriebseinheit kein zusätzlicher Stauraum für die Lebensmittelzerkleinerungseinrichtung nötig, da diese in der Aufnahme platziert sein kann.

Die Antriebseinheit kann derart ausgebildet sein, dass ein selbsttätiges Aktivieren von dieser unabhängig von der Stellung des Koppelelements nicht möglich ist. Dies gilt sowohl für den Fall, dass die Lebensmittelzerkleinerungseinrichtung mit der Antriebseinheit gekoppelt ist als auch für den Fall, dass diese nicht mit der Antriebseinheit gekoppelt ist. Dies bedeutet, dass selbst für den Fall, dass sich das Koppelelement in der ersten Stellung bzw. der Antriebsauslösestellung befindet und die Lebensmittelzerkleinerungseinrichtung mit der Antriebseinheit gekoppelt ist, die Antriebseinheit nicht ohne eine weitere Aktion des Benutzers, wie beispielsweise die oben bereits diskutierte Kraftausübung auf den Aufnahmebehälter und/oder die Lebensmittelzerkleinerungseinrichtung, aktiviert werden kann.

In einer bevorzugten Ausführung kann der Aufnahmebehälter eine Behälteröffnung aufweisen, die durch die Lebensmittelzerkleinerungseinrichtung verschlossen werden kann. Die Behälteröffnung dient zum Einführen von Lebensmitteln in den Aufnahmebehälter. Der Aufnahmebehälter kann nur einzige Öffnung, nämlich die Behälteröffnung aufweisen. Somit kann in einem gekoppelten Zustand des Aufnahmebehälters mit der Lebensmittelzerkleinerungseinrichtung und/oder einem gekoppelten Zustand der Lebensmittelzerkleinerungseinrichtung mit der Antriebseinheit eine die Behälteröffnung aufweisende Seite des Aufnahmebehälters, insbesondere unmittelbar, auf dem Zerkleinerer, insbesondere dem Zerkleinererboden liegen.

Im Ergebnis wirkt die Lebensmittelzerkleinerungseinrichtung als ein Boden des Aufnahmebehälters, wenn die Lebensmittelzerkleinerungseinrichtung auf der Antriebseinheit liegt und somit mit dieser gekoppelt ist. Durch das zuvor genannte Ausbilden der Lebensmittelzerkleinerungseinrichtung verringert sich bezüglich der Ausführungen, bei denen sich die Lebensmittelzerkleinerungseinrichtung durch einen Aufnahmebehälterboden erstreckt, die Anzahl der Bauteile der Lebensmittelzerkleinerungsvorrichtung, da kein separater Deckel zum Verschließen der Behälteröffnung notwendig ist.

Die Antriebseinheit kann wenigstens ein bewegbares Schaltelement aufweisen, das ausschließlich dann im Kontakt mit dem Koppelmittel ist, wenn sich das Koppelelement in der ersten Stellung befindet. Somit ist sichergestellt, dass nur in der ersten Stellung des Koppelmittels ein Aktivieren der Antriebseinheit erfolgen kann.

Bei einem Bewegen der Lebensmittelzerkleinerungseinrichtung und/oder des mit der Lebensmittelzerkleinerungseinrichtung gekoppelten Aufnahmebehälters entlang der jeweiligen Mittelachse, insbesondere in Richtung zur Antriebseinheit, kann das Schaltelement von einer Ausschaltstellung in eine Einschaltstellung, in der die Antriebseinheit die Schneideinheit antreibt, umschalten. Dadurch ist sichergestellt, dass der Benutzer aktiv tätig werden muss, damit die Antriebseinheit aktiviert wird und ein Zerkleinern der in dem Aufnahmebehälter befindlichen Lebensmittel erfolgen kann.

Das Schaltelement kann mit einem Spannmittel gekoppelt sein, das das Schaltelement von der Einschaltstellung in die Ausschaltstellung, insbesondere selbsttätig, bewegt. Diese Bewegung kann erfolgen, nachdem der Benutzer auf die Lebensmittelzerkleinerungseinrichtung und/oder den Aufnahmebehälter keine Kraft ausübt. Somit ist sichergestellt, dass sich das Schaltelement selbsttätig und somit ohne Einwirken des Benutzers in die Ausschaltstellung bewegt.

Das Spannelement kann derart ausgebildet sein, dass sich das Schaltelement nicht aufgrund der Gewichtskraft der Lebensmittelzerkleinerungseinrichtung und/oder des Aufnahmebehälters von der Ausschaltstellung in die Einschaltstellung bewegen kann. Um dieses Umschalten zu realisieren, muss, wie oben bereits erläutert, der Benutzer auf den Aufnahmebehälter und/oder die Lebensmittelzerkleinerungseinrichtung eine Kraft ausüben.

Die Antriebseinheit kann ein Fixiermittel, insbesondere eine Bajonettverbindung aufweisen. Durch dieses kann ein lösbares Fixieren der Lebensmittelzerkleinerungseinrichtung in der Antriebseinheit erreicht werden, wenn das Schaltelement in der Einschaltstellung ist. Dazu kann, nachdem ein Benutzer eine Kraft auf den Aufnahmebehälter und/oder die Lebensmittelzerkleinerungseinrichtung ausgeübt hat, um das Schaltelement in die Einschaltstellung zu bewegen, der Aufnahmebehälter und/oder die Lebensmittelzerkleinerungseinrichtung um die Mittelachse gedreht werden. Dadurch kann erreicht werden, dass das auf das Schaltelement wirkende Spannmittel das Schaltelement in die Ausschaltstellung nicht zurückbewegen kann. Im Ergebnis kann erreicht werden, dass ein Zerkleinern der Lebensmittel erfolgt, ohne dass der Benutzer eine weitere Kraft auf den Aufnahmebehälter und/oder die Lebensmittelzerkleinerungseinrichtung ausüben muss.

Gemäß einem weiteren Aspekt der Erfindung ist ein Set aus einer Vielzahl von Lebensmittelzerkleinerungseinrichtungen und einer Vielzahl von Aufnahmebehältern vorgesehen. Dabei ist jedem Aufnahmebehälter wenigstens eine Lebensmittelzerkleinerungseinrichtung zugeordnet und/oder ein Außendurchmesser eines mit der Lebenszerkleinerungseinrichtung koppelbaren Abschnitts des Aufnahmebehälters ist gleich einem Innendurchmesser einer Zerkleinereraussparung zumindest einer der Vielzahl der Lebensmittelzerkleinerungseinrichtungen.

Die einzelnen Aufnahmebehälter können sich in deren Form voneinander unterscheiden. Die Lebensmittelzerkleinerungseinrichtungen können sich zusätzlich zu dem Innendurchmesser der Zerkleinereraussparung auch noch durch die Form des Schneidmittels voneinander unterscheiden.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind. Dabei zeigen:
Figur 1 eine perspektivische Ansicht einer Lebensmittelzerkleinerungsvorrichtung gemäß einer ersten Ausführung,
Figur 2 eine perspektivische Ansicht auf die Lebensmittelzerkleinerungseinrichtung gemäß einer ersten Ausführung von schräg oben,
Figur 3 eine perspektivische Ansicht auf die Lebensmittelzerkleinerungseinrichtung gemäß einer ersten Ausführung von schräg unten,
Figur 4 eine Explosionsdarstellung des Aufnahmebehälters und der Lebensmittelzerkleinerungseinrichtung gemäß einer ersten Ausführung,
Figur 5 die Lebensmittelzerkleinerungseinrichtung und den Aufnahmebehälter gemäß einer ersten Ausführung im gekoppelten Zustand,
Figur 6 eine Schnittansicht entlang der Längsachse der Lebensmittelzerkleinerungseinrichtung und des Aufnahmebehälters gemäß einer ersten Ausführung in einem ungekoppelten Zustand,
Figur 7 eine Schnittansicht entlang der Längsachse der Lebensmittelzerkleinerungseinrichtung und des Aufnahmebehälters gemäß einer ersten Ausführung im gekoppelten Zustand,
Figur 8 eine perspektivische Ansicht der Lebensmittelzerkleinerungsvorrichtung gemäß einer ersten Ausführung, in der ein Teilbereich ausgeschnitten ist,
Figur 9 eine Seitenansicht der Lebensmittelzerkleinerungsvorrichtung, in der ein Teilbereich ausgeschnitten ist,
Figur 10 eine perspektivische Ansicht einer Lebensmittelzerkleinerungsvorrichtung gemäß einer zweiten Ausführung,
Figur 11 eine perspektivische Ansicht auf die Lebensmittelzerkleinerungseinrichtung gemäß einer zweiten Ausführung von schräg oben,
Figur 12 eine perspektivische Ansicht auf die Lebensmittelzerkleinerungseinrichtung gemäß einer zweiten Ausführung von schräg unten,
Figur 13 eine Explosionsdarstellung des Aufnahmebehälters und der Lebensmittelzerkleinerungseinrichtung gemäß einer zweiten Ausführung,
Figur 14 die Lebensmittelzerkleinerungseinrichtung und den Aufnahmebehälter gemäß einer zweiten Ausführung im gekoppelten Zustand,
Figur 15 eine Schnittansicht entlang der Längsachse der Lebensmittelzerkleinerungseinrichtung und des Aufnahmebehälters gemäß einer zweiten Ausführung in einer Explosionsdarstellung,
Figur 16 eine Schnittansicht entlang der Längsachse der Lebensmittelzerkleinerungseinrichtung und des Aufnahmebehälters gemäß einer zweiten Ausführung im gekoppelten Zustand,
Figur 17 eine perspektivische Ansicht der Lebensmittelzerkleinerungsvorrichtung gemäß einer zweiten Ausführung, in der ein Teilbereich ausgeschnitten ist,
Figur 18 eine Seitenansicht der Lebensmittelzerkleinerungsvorrichtung, in der ein Teilbereich ausgeschnitten ist.

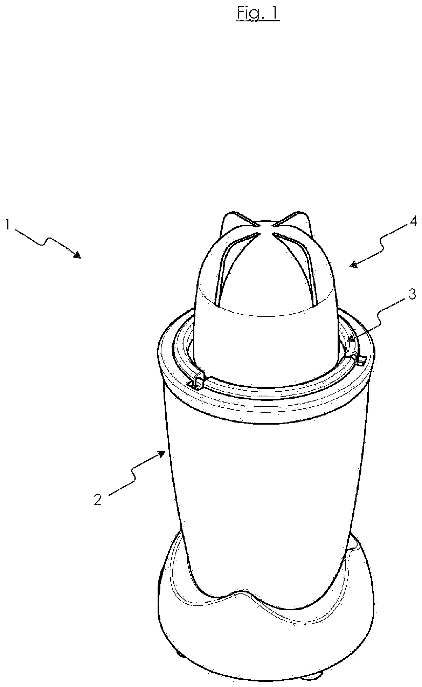

Die in Figur 1 gezeigte Lebensmittelzerkleinerungsvorrichtung 1 weist einen Aufnahmebehälter 4 zum Aufnehmen von Lebensmitteln, eine Antriebseinheit 2 und eine Lebensmittelzerkleinerungseinrichtung 3 zum Zerkleinern der in dem Aufnahmebehälter 4 befindlichen Lebensmittel auf. Die Lebensmittelzerkleinerungseinrichtung 3 ist sowohl mit dem Aufnahmebehälter 4 als auch der Antriebseinheit 2 gekoppelt. Insbesondere ist die Lebensmittelzerkleinerungseinrichtung 3 in einer Aufnahme der Antriebseinheit 2 angeordnet.

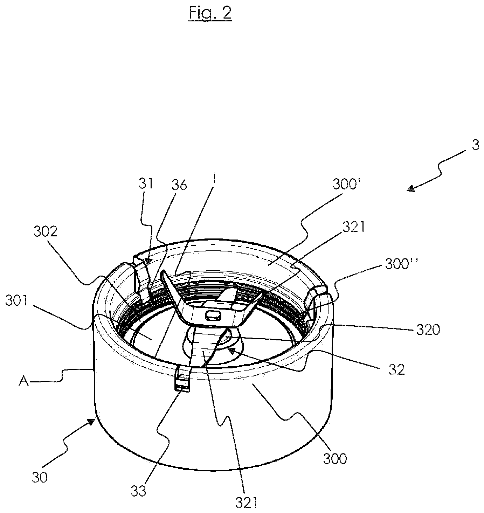

Die Lebensmittelzerkleinerungseinrichtung 3 ist in Figur 2 gezeigt und weist einen Zerkleinerer 30, mehrere Koppelelemente 31 und eine Schneideinheit 32 auf. Die Schneideinheit 32 weist eine Antriebswelle 320 und zwei mit der Antriebswelle 320 gekoppelte Schneidelemente 321 auf. Die Koppelelemente 31 sind am Zerkleinerer drehbar angebracht, wobei die Koppelelemente 31 in Umfangsrichtung des Zerkleinerers 30 beabstandet zueinander angeordnet sind.

Der Zerkleinerer 30 ist an seiner zu dem Aufnahmebehälter 4 zugewandten Seite tassenförmig ausgebildet. Er weist eine Zerkleinererwand 300 auf. Die Zerkleinererwand 300 umschließt eine Zerkleinereraussparung, wobei die Zerkleinereraussparung durch einen Zerkleinererboden begrenzt ist. Der Zerkleinererboden ist zweistufig ausgebildet wobei ein erster Bodenabschnitt 301 durch einen zweiten ringförmigen Bodenabschnitt 302 umschlossen ist. Bei einer Kopplung des Aufnahmebehälters 4 mit der Lebensmittelzerkleinerungseinrichtung 3 gelangt eine Stirnseite, insbesondere eine eine Behälteröffnung umschließende Stirnseite, des Aufnahmebehälters 4 in Kontakt mit dem zweiten Bodenabschnitt 302.

Der erste Bodenabschnitt 301 erstreckt sich von dem zweiten Bodenabschnitt 302 in Richtung zum Schneidelement 321. Insbesondere erstreckt sich der erste Bodenabschnitt 301 von dem zweiten Bodenabschnitt 302 derart, dass dieser in die Behälteröffnung des Aufnahmebehälters 4 eindringt, wenn der Aufnahmebehälter 4 mit der Lebensmittelzerkleinerungseinrichtung 3 gekoppelt ist.

Der die Zerkleinereraussparung definierende Teil der Zerkleinererwand 300 ist zweistufig ausgebildet. Eine erste Wandstufe 300' ist vom Zerkleinererboden weiter entfernt angeordnet als eine zweite Wandstufe 300" und weist einen größeren Innendurchmesser auf als die zweite Wandstufe 300". Die Zerkleinererwand 300 weist Durchbrüche 33 auf, die sich von einer Innenseite I der Zerkleinererwand 300 zu einer Außenseite A der Zerkleinererwand 300 erstrecken. Das Koppelmittel 3 kann sich in dem zugeordneten Durchbruch 33 bewegen, um die unterschiedlichen Stellungen einzunehmen. Die Durchbrüche 33 sind in der ersten Wandstufe 300' vorgesehen.

Darüber hinaus weist die Zerkleinererwand 300 Ausnehmungen 36 auf, in die sich die Koppelmittel 3 ebenfalls teilweise erstrecken und in denen die Koppelmittel 3 drehbar gelagert sind. Die Ausnehmungen 36 sind an einer Innenseite I der Zerkleinererwand 300, insbesondere des zweiten Wandabschnitts 300", vorgesehen und erstrecken sich nicht vollständig durch die Zerkleinererwand 300. Zudem sind die Ausnehmungen 36 mit den jeweils zugeordneten Durchbrüchen 33 verbunden. Die Zerkleinererwand 300, insbesondere der zweite Wandabschnitt 300', weist außerdem an der Innenseite I ein Innengewinde auf, über das die Lebensmittelzerkleinerungseinrichtung 3 mit dem Aufnahmebehälter 4 gekoppelt werden kann.

Die Antriebswelle 320 der Schneideinheit 32 erstreckt sich zum Teil durch den Zerkleinerer 30 und ist koaxial zu diesem angeordnet. Dabei ist die Antriebswelle 2 an dem in die Zerkleinereraussparung ragenden Ende mit den Schneidelementen 321 verbunden.

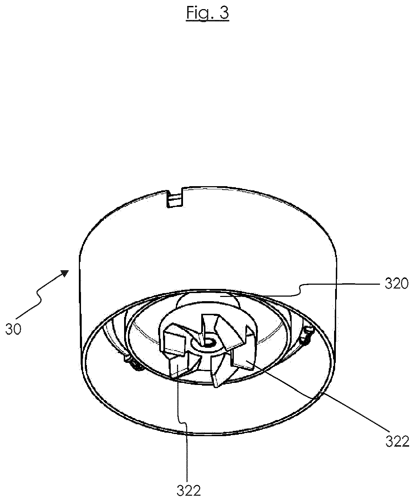

Wie aus Figur 3 ersichtlich ist, ist die Antriebswelle 320 an ihrem dem Schneidelement 321 abgewandten Ende mit Klauen 322 einer Klauenkupplung verbunden. In den Figuren nicht dargestellte Gegenklauen sind an der Antriebseinheit 4 vorgesehen. Die Klauen 322 der Lebensmittelzerkleinerungseinrichtung 3 gelangen in eine Wirkverbindung mit den Gegenklauen der Antriebseinheit 4, wenn die Lebensmittelzerkleinerungseinrichtung 3 in der Aufnahme der Antriebseinheit 4 angeordnet ist. Dies bedeutet, dass bei einer Aktivierung der Antriebseinheit 4 eine Drehbewegung der Antriebseinheit 4 über die Klauenkupplung und die Antriebswelle 320 auf die Schneidelemente 321 übertragen wird.

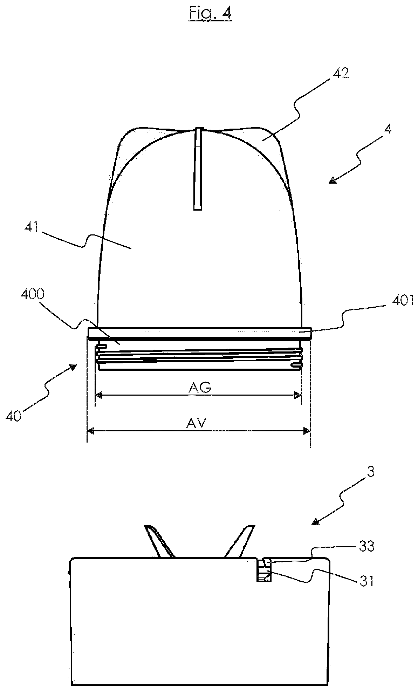

Figur 4 zeigt eine Explosionsdarstellung des Aufnahmebehälters 4 und der Lebensmittelzerkleinerungseinrichtung 3. Der Aufnahmebehälter 4 weist an seinem der Lebensmittelzerkleinerungseinrichtung 3 zugewandten Ende einen mit der Lebensmittelzerkleinerungseinrichtung 3 koppelbaren Abschnitt 40 auf. Der koppelbare Abschnitt 40 weist ein Außengewinde 400 und einen Vorsprung 401 auf. Der, insbesondere ringförmige, Vorsprung 401 ragt von einer Behälterwand 41 des Aufnahmebehälters 4, insbesondere in radialer Richtung, vor.

Ein Außendurchmesser AV des Vorsprungs 401 ist größer als der Außendurchmesser AG des Außengewindes 400. Der Außendurchmesser AV des Vorsprungs 401 entspricht oder entspricht im Wesentlichen dem Innendurchmesser des ersten Wandabschnitts 300' des Zerkleinerers 30, wobei jedoch sichergestellt ist, dass der Aufnahmebehälter in die Zerkleinereraussparung eingeführt werden kann. Der Außendurchmesser AG des Außengewindes 400 entspricht oder entspricht im Wesentlichen dem Innendurchmesser des zweiten Wandabschnitts 300". An dem von der Lebensmittelzerkleinerungsvorrichtung 3 entfernten Ende des Aufnahmebehälters 4 sind Füße 42 vorgesehen. Die Füße 42 ermöglichen, dass der Aufnahmebehälter 4 auf eine Ebene gestellt werden kann, ohne dass dieser umfällt.

Im in Figur 4 dargestellten ungekoppelten Zustand des Aufnahmebehälters 4 und der Lebensmittelzerkleinerungseinrichtung 3 befinden sich die Koppelmittel 31 in der zweiten Stellung, die im Folgenden als Sicherheitsstellung bezeichnet ist. In der Sicherheitsstellung ragen die Koppelmittel 31 nicht oder nur geringfügig von der Außenseite der Zerkleinererwand 30 vor.

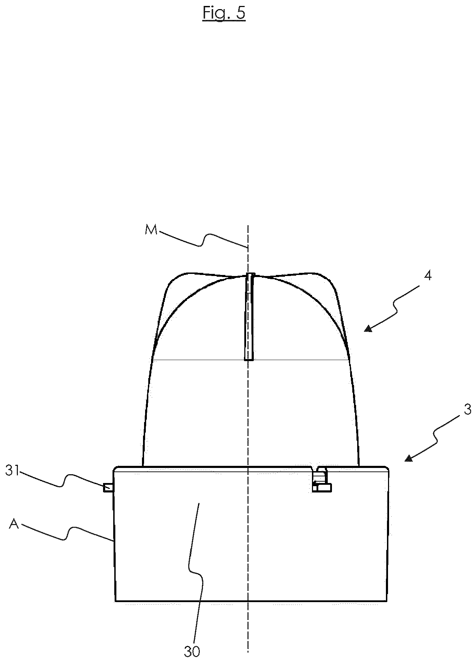

Figur 5 zeigt den Aufnahmebehälter 4 und die Lebensmittelzerkleinerungseinrichtung 3 in einer gekoppelten Stellung. In dieser befinden sich die Koppelmittel 31 in einer ersten Stellung, die im Folgenden als Antriebsauslösestellung bezeichnet wird. In der Antriebsauslösestellung ragen die Koppelemente 31 von der Außenseite A der Zerkleinererwand 30 in radialer Richtung hervor.

Der Aufnahmebehälter 4 kann über das Außengewinde 40 und das an dem zweiten Wandabschnitt 300" vorhandene Innengewinde mit der Lebensmittelzerkleinerungseinrichtung 3 verschraubt werden. Somit ist eine Bewegung des Aufnahmebehälters 4 relativ zur Lebensmittelzerkleinerungseinrichtung 3 entlang einer Mittelachse M der Lebensmittelzerkleinerungseinrichtung 3 verhindert.

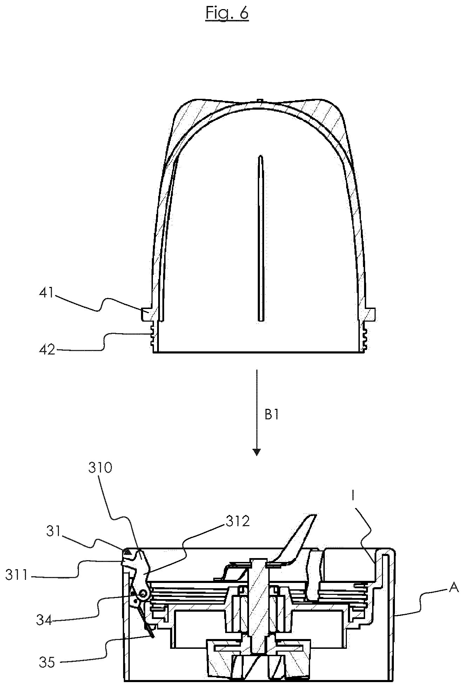

Wie aus Figur 6 ersichtlich ist, ist das Koppelmittel 31 über ein Gelenk 34 drehbar an dem Zerkleinerer 30 angebracht. Zudem ist das Koppelmittel 31 mit einem Spannmittel 35 verbunden, das sich an dem von dem Koppelmittel 31 abgewandten Ende am Zerkleinerer 10 abstützt. Das Spannmittel 35 ist derart ausgebildet und angeordnet, dass bei einem Bewegen des Koppelmittels 31 in die Antriebsauslösestellung das Spannmittel 35 gespannt wird.

Im ungekoppelten Zustand des Aufnahmebehälters 4 mit der Lebensmittelzerkleinerungseinrichtung 3 steht das Koppelmittel 31 von der Innenseite I der Zerkleinererwand 30, insbesondere von der Innenseite I des ersten Wandabschnitts 300', in radialer Richtung nach innen hervor. Das Koppelmittel 31 weist einen ersten Koppelabschnitt 310 auf, der bezogen auf die Mittelachse M der Lebensmittelzerkleinerungseinrichtung 3 und/oder eine Einführrichtung B des Aufnahmebehälters 4 schräg ausgebildet ist.

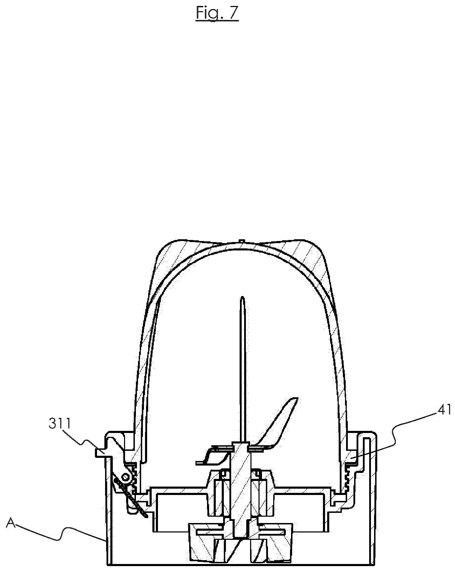

Zudem weist das Koppelmittel 31 einen zweiten Koppelabschnitt 311, der sich, insbesondere in radialer Richtung, von dem ersten Koppelabschnitt 310 erstreckt und in der Sicherheitsstellung des Koppelmittels 31 im Wesentlichen vollständig in dem Durchbruch 33 angeordnet ist. Wie aus Figur 7 ersichtlich ist, ragt der zweite Koppelabschnitt 312 teilweise von der Außenseite A des Zerkleinerers 30 hervor, wenn sich das Koppelmittel 31 in der Antriebsauslösestellung befindet.

Des Weiteren weist das Koppelmittel 31 einen dritten Koppelabschnitt 312 auf, der mit dem ersten und zweiten Koppelabschnitt 310, 311 verbunden ist. Der dritte Koppelabschnitt 312 ist derart ausgebildet, dass dieser in der Antriebsauslösestellung des Koppelmittels 31 in unmittelbaren Kontakt mit einer Stirnseite des Vorsprungs 41 des Aufnahmebehälters 4 ist. Zudem ist der dritte Koppelabschnitt 312 form komplementär zu dem Vorsprung 41, insbesondere einer radialen Stirnseite des Vorsprungs 41, ausgebildet, wie in Figur 7 gezeigt ist. Dagegen ist der erste Koppelabschnitt 310 derart ausgebildet, dass dieser in der Antriebsauslösestellung mit dem Vorsprung 41 nicht in Kontakt ist und schräg zur Mittelachse M der Lebensmittelzerkleinerungseinrichtung 3 verläuft.

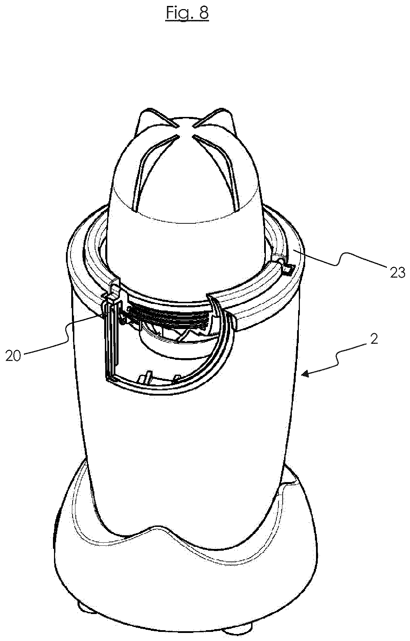

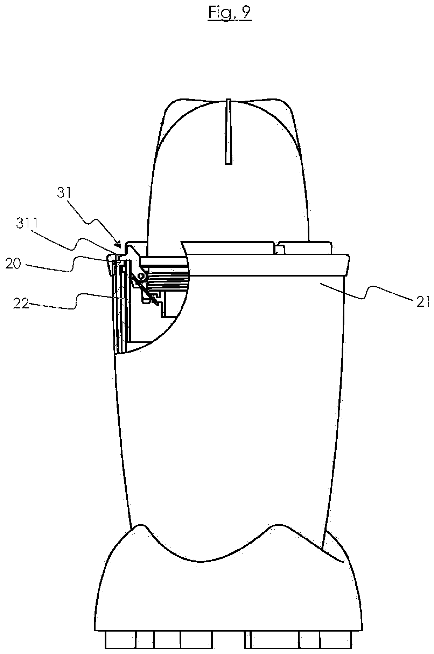

Die Antriebseinheit 4 weist, wie aus den Figuren 8 und 9 ersichtlich ist, eine Aufnahme auf, in die die Lebensmittelzerkleinerungseinrichtung 3 eingesetzt ist, um eine Kopplung zwischen der Lebensmittelzerkleinerungseinrichtung 3 und der Antriebseinheit 2 herzustellen. Darüber hinaus weist die Antriebseinheit 2 mehrere Schaltelemente 20 auf, die in Umfangsrichtung voneinander beabstandet angeordnet sind.

Die Schaltelemente 20 sind in einer Aussparung der Aufnahmebehälterwand 21 angeordnet und befinden sich in einer Ausschaltstellung, in der die Antriebseinheit 2 nicht aktiviert ist. Das Schaltelement 20 ist bezogen auf eine der Lebensmittelzerkleinerungseinrichtung 3 zugewandte Stirnseite 23 des Aufnahmebehälters 4 entlang der Mittelachse der Antriebseinheit 4 abgesenkt. Die Aussparung in der Aufnahmebehälterwand 21 und das Schaltelement 20 sind derart ausgebildet, dass sich das Schaltelement 20 um einen gewissen Abstand in einer Richtung parallel zu einer Mittelachse der Antriebseinheit 4 und relativ zu der Aufnahmebehälterwand 21 bewegen kann, bevor diese gegen einen Innenbereich 22 der Aufnahmebehälterwand stößt. Das Schaltelement 20 befindet sich nach der Bewegung bzw. nachdem es gegen den Innenbereich 22 stößt in einer Einschaltstellung, in der die Antriebseinheit 4 aktiviert ist und in der ein Drehmoment von der Antriebseinheit 4 über die Klauenkupplung auf die Schneideinheit der Lebensmittelzerkleinerungseinrichtung 3 übertragen wird.

Die mit dem Aufnahmebehälter 4 gekoppelte Lebensmittelzerkleinerungseinrichtung 3 ist derart auf die Antriebseinheit 2 gesetzt, dass das Koppelmittel 31, insbesondere der zweite Koppelabschnitt 311, auf dem Schaltelement 20 liegt. Das Schaltelement 20 ist an dem von dem Koppelmittel 31 abgewandten Ende mit einem weiteren nicht dargestellten Spannmittel gekoppelt, das das Schaltelement 20 in der Ausschaltstellung vorspannt. Das weitere Spannmittel ist derart ausgebildet, dass sich das Schaltelement 20 nicht aufgrund der Gewichtskraft des Aufnahmebehälters 4 und der Lebensmittelzerkleinerungseinrichtung 3 in die Einschaltstellung bewegt.

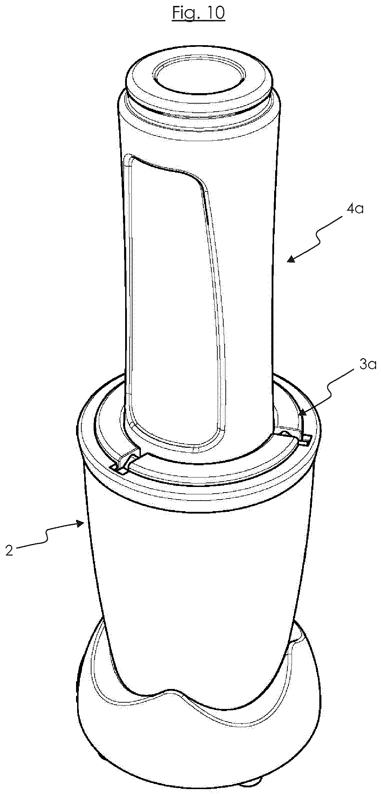

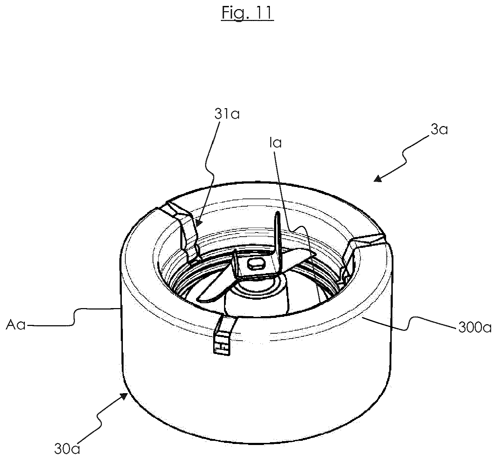

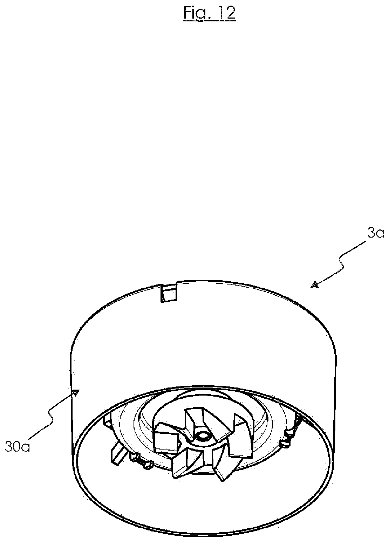

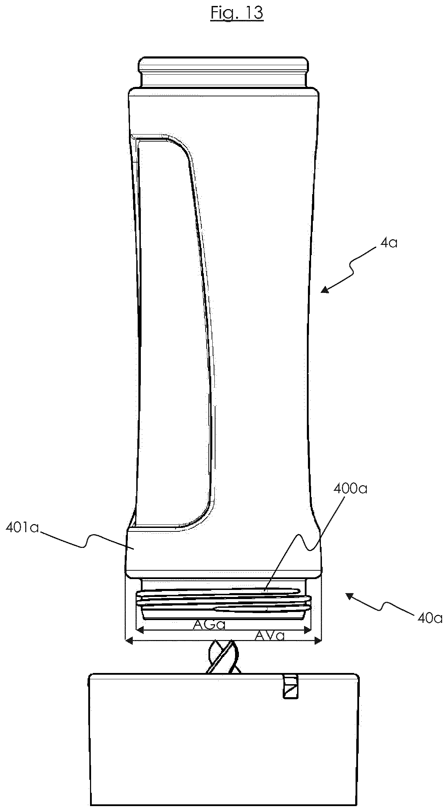

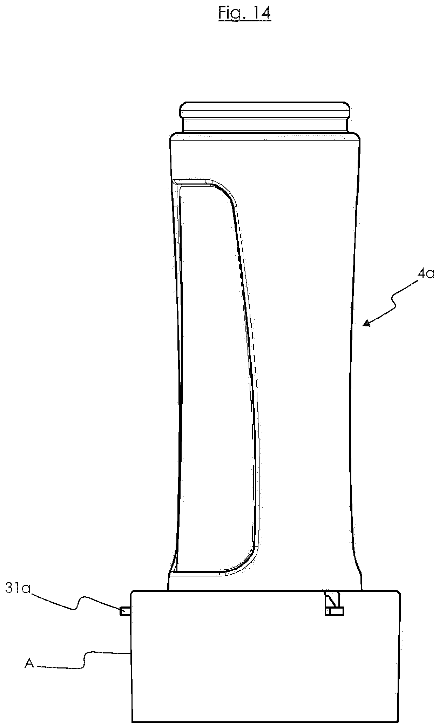

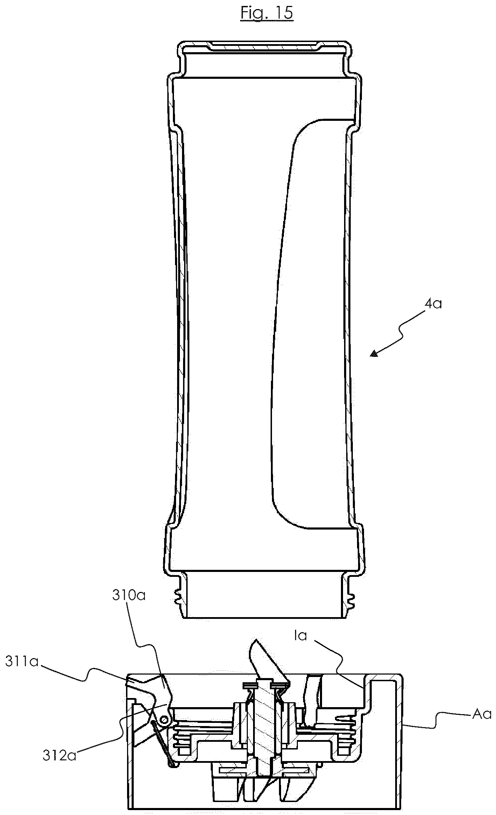

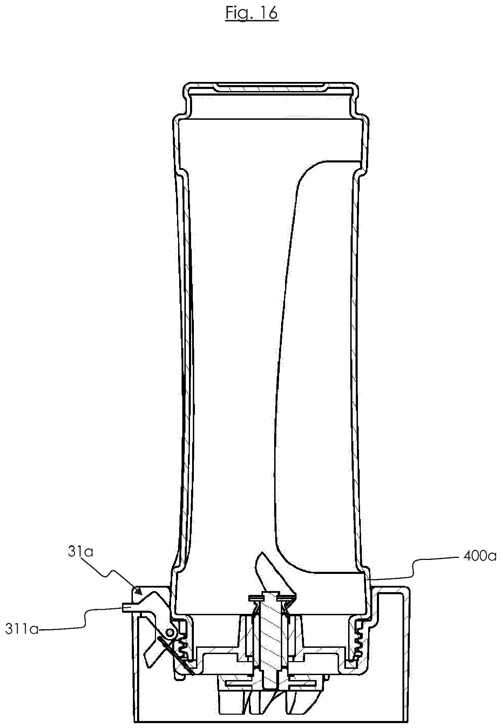

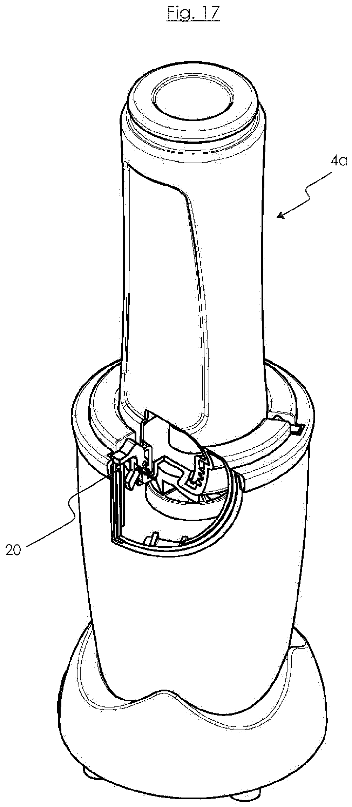

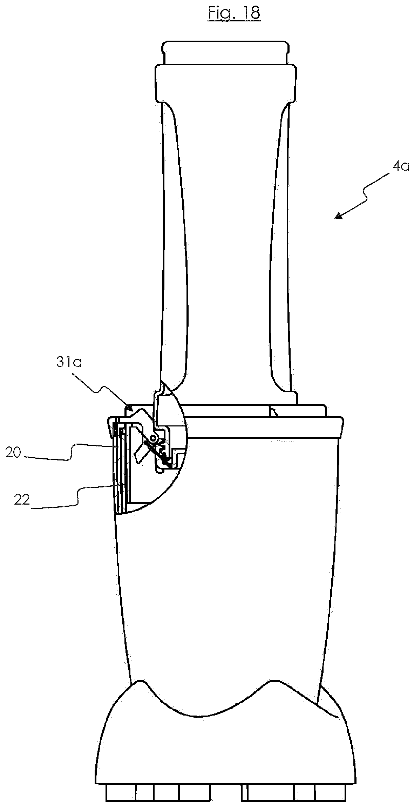

Die Figuren 10 bis 18 zeigen unter anderem eine Lebensmittelzerkleinerungseinrichtung und einen Aufnahmebehälter gemäß einer zweiten Ausführung. Im Folgenden wird nur auf die Unterschiede zwischen den beiden Ausführungen eingegangen.

Der Aufnahmebehälter 4a gemäß der zweiten Ausführung unterscheidet sich in dessen äußeren Form von dem Aufnahmebehälter 4 gemäß der ersten Ausführung. So ist der Aufnahmebehälter 4a deutlich schmaler und länglicher ausgebildet als der Aufnahmebehälter 4 gemäß der ersten Ausführung. Aufgrund der schmaleren Ausbildung des Aufnahmebehälters 4a weist der Vorsprung 401a und/oder das Außengewinde 400a des koppelbaren Abschnitts 40a einen geringeren Außendurchmesser (AVa, AGa) auf als der Vorsprung 401 und/oder das Außengewinde 400 des Aufnahmebehälters 4 gemäß der ersten Ausführung.

Die Lebensmittelzerkleinerungseinrichtung 3a gemäß der zweiten Ausführung unterscheidet sich von der Lebensmittelzerkleinerungseinrichtung 3 gemäß der ersten Ausführung in der Ausbildung des Zerkleinerers 30a und des Koppelmittels 31a. So weist die Zerkleinererwand 300a, insbesondere der erste und/oder zweite Wandabschnitt 300', 300", des Zerkleinerers 30a einen kleineren Innendurchmesser auf als die Zerkleinererwand 300 des Zerkleinerers 30 gemäß der ersten Ausführung.

Aufgrund des kleineren Innendurchmessers der Zerkleinererwand 300a ist der radiale Abstand zwischen der Innenseite la und der Außenseite Aa des Zerkleinerers 30a größer als in der ersten Ausführung. Daher ist die Form des Koppelmittels 3a, insbesondere der drei Koppelabschnitte 310a, 311a, 312a, abgeändert derart, dass dieses in der Antriebsauslösestellung von der Außenseite Aa des Zerkleinerers 30a hervorstehen kann. Insbesondere ist der zweite Koppelabschnitt 312a länglicher ausgebildet als der zweite Koppelabschnitt 312 gemäß der ersten Ausführung.

Im Folgenden wird der Betrieb einer Lebensmittelzerkleinerungsvorrichtung gemäß der ersten Ausführung beschrieben, wobei der Betrieb der Lebensmittelzerkleinerungsvorrichtung gemäß der zweiten Ausführung oder einer anderen Ausführung mit anderer Form des Aufnahmebehälters in gleicher Weise erfolgt.

Nach einem Einfüllen von zu zerkleinernden Lebensmitteln in den Aufnahmebehälter 4 wird dieser durch die Lebensmittelzerkleinerungseinrichtung 3 verschlossen und somit mit dieser gekoppelt. Zum Koppeln wird der Aufnahmebehälter 4 mit seinem den koppelbaren Abschnitt 40 aufweisenden Ende voran in die Zerkleinereraussparung des Zerkleinerers 30 eingeführt bzw. die Lebensmittelzerkleinerungseinrichtung 3 wird auf diesen abgesetzt. Beim Einführen gelangt der Vorsprung 40 in unmittelbaren Kontakt mit dem ersten Koppelabschnitt 310 und drückt diesen in radialer Richtung nach außen, so dass der zweite Koppelabschnitt 311 von der Außenseite A der Zerkleinererwand 30a vorragt.

Zum weiteren Koppeln des Aufnahmebehälters 4 mit der Lebensmittelzerkleinerungseinrichtung 3 wird der Aufnahmebehälter 4 um die eigene Längsachse gedreht, so dass über das Außengewinde und das Innengewinde des Zerkleinerers der Aufnahmebehälter 4 und die Lebensmittelzerkleinerungseinrichtung 3 miteinander verschraubt werden. Im Ergebnis befinden sich die Koppelmittel 31 nach der Kopplung des Aufnahmebehälters 4 mit der Lebensmittelzerkleinerungseinrichtung 2 in der Antriebsauslösestellung.

Die Lebensmittelzerkleinerungseinrichtung 3 wird derart auf die Antriebseinheit 2 gesetzt bzw. in die Aufnahme der Antriebseinheit 2 eingeführt, dass die Koppelmittel 31 unmittelbar auf dem jeweils zugeordneten Schaltelement 20 der Antriebseinheit 2 liegen.

Anschließend wird durch den Benutzer eine Kraft auf den Aufnahmebehälter 4 und/oder die Lebensmittelzerkleinerungseinrichtung 3 in Richtung der Antriebseinheit 2 ausgeübt. Die Kraft ist parallel oder im Wesentlichen parallel zu der Mittelachse des Aufnahmebehälters 4 und/oder der Lebensmittelzerkleinerungseinrichtung 3 gerichtet. Infolge der Kraftausübung drücken die Koppelelemente 31 die Schaltelemente 20 in eine Richtung weg von dem Aufnahmebehälter 4 und bewegen die Schaltelemente 20 in die Einschaltstellung. In der Einschaltstellung ist die Antriebseinheit 2 aktiviert und ein von der Antriebseinheit 2 abgegebenes Drehmoment wird auf die Schneideinheit 32 der Lebensmittelzerkleinerungseinrichtung 3 übertragen, wodurch ein Zerkleinern der in dem Aufnahmebehälter 4 befindlichen Lebensmittel erfolgt.

Sobald der Benutzer keine Kraft auf den Aufnahmebehälter und/oder die Lebensmittelzerkleinerungseinrichtung ausübt wird das Schaltmittel 20 durch das weitere Spannmittel in die Ausschaltstellung gedrückt, wodurch die Antriebseinheit deaktiviert wird.

### Bezugszeichenliste:

- 1: Lebensmittelzerkleinerungsvorrichtung
- 2: Antriebseinheit
- 3, 3a: Lebensmittelzerkleinerungseinrichtung
- 4, 4a: Aufnahmebehälter
- 20: Schaltelement
- 21: Aufnahmebehälterwand
- 22: Innenbereich
- 23: Stirnseite der Antriebseinheit
- 30, 30a: Zerkleinerer
- 31, 31a: Koppelmittel
- 32: Schneideinheit
- 33: Durchbruch
- 34: Gelenk
- 35: Spannelement
- 36: Ausnehmung
- 40, 40a: koppelbarer Abschnitt
- 41: Behälterwand
- 300: Zerkleinererwand
- 300': erste Wandstufe
- 300": zweite Wandstufe
- 301: erster Bodenabschnitt
- 302: zweiter Bodenabschnitt
- 310, 310a: erster Koppelabschnitt
- 311, 311a: zweiter Koppelabschnitt
- 312, 312a: dritter Koppelabschnitt
- 320: Antriebswelle
- 321: Schneidelement
- 322: Klauen
- 400, 400a: Außengewinde
- 401, 401a: Vorsprung
- A, Aa: Außenseite
- B: Einführrichtung
- I, Ia: Innenseite
- M: Mittelachse
- AV, AVa: Außendurchmesser des Vorsprungs
- AG, AGa: Außendurchmesser des Außengewindes

## Patentansprüche

1. Lebensmittelzerkleinerungseinrichtung (3) mit einem Zerkleinerer (30), der mit einer Antriebseinheit (2) und einem Aufnahmebehälter (4) koppelbar ist, wobei die Lebensmittelzerkleinerungseinrichtung (3) wenigstens ein bewegbares Koppelmittel (31) aufweist, das an dem Zerkleinerer (30) angebracht ist, wobei sich das Koppelmittel (31) im gekoppelten Zustand des Aufnahmebehälters (4) mit dem Zerkleinerer (30) in einer ersten Stellung und im ungekoppelten Zustand in einer zweiten Stellung befindet und die erste Stellung des Koppelmittels (31) einer Antriebsauslösestellung entspricht, in der ein Antreiben einer Schneideinheit (32) der Lebensmittelzerkleinerungseinrichtung (3) durch die Antriebseinheit (2) möglich ist, wobei die Antriebseinheit (2) durch die Lebensmittelzerkleinerungseinrichtung (3) aktivierbar ist, **dadurch gekennzeichnet, dass** das Koppelmittel (31) in der ersten Stellung von einer Außenseite (A) des Zerkleinerers (30) in radialer Richtung nach außen hervorsteht und das Koppelmittel (31) in der zweiten Stellung von einer Innenseite (I) des Zerkleinerers (30) in radialer Richtung nach innen hervorsteht.

2. Lebensmittelzerkleinerungseinrichtung (3) nach Anspruch 1, **dadurch gekennzeichnet, dass** die zweite Stellung des Koppelmittels (31) einer Sicherheitsstellung entspricht, in der ein Antreiben der Schneideinheit (32) der Lebensmittelzerkleinerungseinrichtung durch die Antriebseinheit (2) undurchführbar ist.

3. Lebensmittelzerkleinerungseinrichtung (3) nach einem der vorhergehenden Ansprüche, **dadurch gekennzeichnet, dass**
a. das Koppelmittel (31) an dem Zerkleinerer (30) drehbar angebracht ist und/oder
b. das Koppelmittel (31) einen ersten Koppelabschnitt (310) aufweist, der beim Koppeln des Aufnahmebehälters (4) mit dem Zerkleinerer (30) in, insbesondere unmittelbaren Kontakt, mit dem Aufnahmebehälter (4) bringbar ist.

4. Lebensmittelzerkleinerungseinrichtung (3) nach einem der vorhergehenden Ansprüche, **dadurch gekennzeichnet, dass** die Lebensmittelzerkleinerungseinrichtung (3) an einer ersten Seite mit dem Aufnahmebehälter (4) und an einer, insbesondere einer der ersten Seite gegenüberliegenden, zweiten Seite mit der Antriebseinheit (2) koppelbar ist.

5. Lebensmittelzerkleinerungseinrichtung (3) nach einem der vorhergehenden Ansprüche, **gekennzeichnet durch** ein mit dem Koppelmittel (31) verbundenes Spannelement (35), das nach einem Entkoppeln des Aufnahmebehälters (4) von dem Zerkleinerer (30) eine Rückbewegung des Koppelmittels (31) von der ersten Stellung in die zweite Stellung bewirkt.

6. Lebensmittelzerkleinerungseinrichtung (3) nach einem der vorhergehenden Ansprüche, **gekennzeichnet durch** eine Schneideinheit (32), die eine Antriebswelle (320) und wenigstens ein mit der Antriebswelle (320), insbesondere unmittelbar, verbundenes Schneidmittel (321) aufweist, wobei die Antriebswelle (320) an dem vom Schneidmittel (321) abgewandten Ende mit der Antriebseinheit (2) koppelbar ist.

7. System mit einer Lebensmittelzerkleinerungseinrichtung (3) nach einem der vorhergehenden Ansprüche und
a. einem mit der Lebensmittelzerkleinerungseinrichtung (3) koppelbaren Aufnahmebehälter (4) und/oder
b. einer mit der Lebensmittelzerkleinerungseinrichtung (3) koppelbaren Antriebseinheit (2).

8. System nach dem vorhergehenden Anspruch, **dadurch gekennzeichnet, dass** bei einem Koppeln des Aufnahmebehälters (4) mit der Lebensmittelzerkleinerungseinrichtung (3) der Aufnahmebehälter (4) das Koppelmittel (31) in die erste Stellung überführt.

9. System nach einem der Ansprüche 7 oder 8, **dadurch gekennzeichnet, dass**
a. die Antriebseinheit (2) eine Aufnahme für die Lebensmittelzerkleinerungseinrichtung (3) aufweist, wobei die Lebensmittelzerkleinerungseinrichtung (3) unabhängig von der Stellung des Koppelmittels (31), insbesondere unmittelbar, in die Aufnahme einführbar ist und/oder
b ein selbsttätiges Antreiben der Antriebseinheit (2) unabhängig von der Stellung des Koppelmittels (31) undurchführbar ist.

10. System nach einem der Ansprüche 7 bis 9, **dadurch gekennzeichnet, dass** die Lebensmittelzerkleinerungseinrichtung (3) eine Behälteröffnung des Aufnahmebehälters (4) verschließt.

11. System nach einem der Ansprüche 7 bis 10, **dadurch gekennzeichnet, dass** die Antriebseinheit (2) wenigstens ein bewegbares Schaltelement (20) aufweist, das ausschließlich dann im Kontakt mit dem Koppelmittel (31) ist, wenn sich dieses in der ersten Stellung befindet.

12. System nach einem der Ansprüche 7 bis 11, **dadurch gekennzeichnet, dass** bei einem Bewegen der Lebensmittelzerkleinerungseinrichtung (3) entlang deren Mittelachse (M), insbesondere in Richtung zur Antriebseinheit (2), das Schaltelement (20) von einer Ausschaltstellung in eine Einschaltstellung, in der die Antriebseinheit (2) die Schneideinheit (32) antreibt, umschaltet.

13. System nach einem der Ansprüche 7 bis 12, **dadurch gekennzeichnet, dass** das Schaltelement (20) mit einem Spannmittel gekoppelt ist, das das Schaltelement (20) von der Einschaltstellung in die Ausschaltstellung, insbesondere selbsttätig, bewegt.

14. System nach einem der Ansprüche 7 bis 13, **dadurch gekennzeichnet, dass** die Antriebseinheit (2) ein Fixiermittel, insbesondere eine Bajonettverbindung, zum lösbaren Fixieren der Lebensmittelzerkleinerungseinrichtung (3) in der Antriebseinheit (2) aufweist, wenn das Schaltelement (20) in der Einschaltstellung ist.

15. Set aus einer Vielzahl von Lebensmittelzerkleinerungseinrichtungen (3) nach einem der Ansprüche 1 bis 6 und einer Vielzahl von Aufnahmebehältern (4), **dadurch gekennzeichnet, dass**
a. jedem Aufnahmebehälter (4) wenigstens eine Lebensmittelzerkleinerungseinrichtung (3) zugeordnet ist und/oder
b. ein Außendurchmesser (AV, AG) eines mit der Lebensmittelzerkleinerungseinrichtung (3) koppelbaren Abschnitts (40) des Aufnahmebehälters (4) gleich einem Innendurchmesser einer Zerkleinereraussparung zumindest einer der Vielzahl der Lebensmittelzerkleinerungseinrichtungen (3) ist.

## Claims

1. Device (3) for the comminution of foodstuffs having a macerator (30) which is couplable with a drive unit (2) and with a receiving container (4), wherein the device (3) for the comminution of foodstuffs comprises at least one movable coupling means (31) which is mounted on the macerator (30), wherein when the receiving container (4) is coupled with the macerator (30) the coupling means (31) is situated in a first position and when it is uncoupled it is situated in a second position and the first position of the coupling means (31) corresponds to a drive triggering position in which driving a cutting unit (32) of the device (3) for the comminution of foodstuffs by means of the drive unit (2) is possible, wherein the drive unit (2) is activatable by means of the device (3) for the comminution of foodstuffs, **characterized in that** the coupling means (31) stands out from an outside surface (A) of the macerator (30) radially outward in the first position and the coupling means (31) stands out from an inside surface (I) of the macerator (30) radially inward in the second position.

2. Device (3) for the comminution of foodstuffs according to Claim 1, **characterized in that** the second position of the coupling means (31) corresponds to a safety position in which driving the cutting unit (32) of the device (3) for the comminution of foodstuffs by means of the drive unit (2) is unfeasible.

3. Device (3) for the comminution of foodstuffs according to one of the preceding claims, **characterized in that**
a. the coupling means (31) is mounted on the macerator (30) so as to be rotatable and/or
b. the coupling means (31) comprises a first coupling portion (310) which is movable into contact, in particular direct contact, with the receiving container (4) when coupling the receiving container (4) with the macerator (30).

4. Device (3) for the comminution of foodstuffs according to one of the preceding claims, **characterized in that** the device (3) for the comminution of foodstuffs is couplable with the receiving container (4) on a first side and with the drive unit (2) on a second side, which is in particular located opposite the first side.

5. Device (3) for the comminution of foodstuffs according to one of the preceding claims, **characterized by** a tensioning element (35) which is connected to the coupling means (31) and brings about a return movement of the coupling means (31) from the first position into the second position once the receiving container (4) has been uncoupled from the macerator (30).

6. Device (3) for the comminution of foodstuffs according to one of the preceding claims, **characterized by** a cutting unit (32) which comprises a drive shaft (320) and at least one cutting means (321) which is connected, in particular directly, to the drive shaft (320), wherein the drive shaft (320) is couplable with the drive unit (2) at the end remote from the cutting means (321).

7. System having a device (3) for the comminution of foodstuffs (3) according to one of the preceding claims and having
a. a receiving container (4) which is couplable with the device (3) for the comminution of foodstuffs and/or
b. a drive unit (2) which is couplable with the device (3) for the comminution of foodstuffs.

8. System according to the preceding claim, **characterized in that** when the receiving container (4) is coupled with the device (3) for the comminution of foodstuffs, the receiving container (4) transfers the coupling means (31) into the first position.

9. System according to either of Claims 7 or 8, **characterized in that**
a. the drive unit (2) comprises a receiving means for the device (3) for the comminution of foodstuffs, wherein the device (3) for the comminution of foodstuffs is insertable, in particular directly, into the receiving means irrespective of the position of the coupling means and/or
b driving the drive unit (2) automatically irrespective of the position of the coupling means (31) is unfeasible.

10. System according to one of Claims 7 to 9, **characterized in that** the device (3) for the comminution of foodstuffs closes a container opening of the receiving container (4).

11. System according to one of Claims 7 to 10, **characterized in that** the drive unit (2) comprises at least one movable switching element (20) which is in contact with the coupling means (31) exclusively when said coupling means is situated in the first position.

12. System according to one of Claims 7 to 11, **characterized in that** when the device (3) for the comminution of foodstuffs moves along the center axis (M) thereof, in particular in the direction of the drive unit (2), the switching element (20) switches over from an Off position into an On position in which the drive unit (2) drives the cutting unit (32).

13. System according to one of Claims 7 to 12, **characterized in that** the switching element (20) is coupled with a tensioning means which moves, in particular automatically, the switching element (20) from the On position into the Off position.

14. System according to one of Claims 7 to 13, **characterized in that** the drive unit (2) comprises a fixing means, in particular a bayonet connection, for releasably fixing the device (3) for the comminution of foodstuffs in the drive unit (2) when the switching element (20) is in the On position.

15. Set produced from a plurality of devices (3) for the comminution of foodstuffs according to one of Claims 1 to 6 and from a plurality of receiving containers (4), **characterized in that**
a. each receiving container (4) has associated therewith at least one device (3) for the comminution of foodstuffs and/or
b. an outside diameter (AV, AG) of a portion (40) of the receiving container (4), which is couplable with the device (3) for the comminution of foodstuffs, is equal to an inside diameter of a macerator gap of at least one of the plurality of devices (3) for the comminution of foodstuffs.

## Revendications

1. Dispositif de broyage de denrées alimentaires (3) avec un broyeur (30), qui peut être couplé à une unité d'entraînement (2) et à un récipient de réception (4), dans lequel le dispositif de broyage de denrées alimentaires (3) présente au moins un moyen de couplage mobile (31), qui est monté sur le broyeur (30), dans lequel le moyen de couplage (31) se trouve à l'état couplé du récipient de réception (4) avec le broyeur (30) dans une première position et à l'état découplé dans une deuxième position et la première position du moyen de couplage (31) correspond à une position de déclenchement de l'entraînement, dans laquelle un entraînement d'une unité de coupe (32) du dispositif de broyage de denrées alimentaires (3) par l'unité d'entraînement (2) est possible, dans lequel l'unité d'entraînement (2) peut être activée par le dispositif de broyage de denrées alimentaires (3), **caractérisé en ce que** le moyen de couplage (31) dans la première position est saillant en direction radiale vers l'extérieur hors d'un côté extérieur (A) du broyeur (30) et le moyen de couplage (31) dans la deuxième position est saillant en direction radiale vers l'intérieur hors d'un côté intérieur (I) du broyeur (30).

2. Dispositif de broyage de denrées alimentaires (3) selon la revendication 1, **caractérisé en ce que** la deuxième position du moyen de couplage (31) correspond à une position de sécurité, dans laquelle un entraînement de l'unité de coupe (32) du dispositif de broyage de denrées alimentaires par l'unité d'entraînement (2) ne peut pas être effectué.

3. Dispositif de broyage de denrées alimentaires (3) selon l'une quelconque des revendications précédentes, **caractérisé en ce que**:
a. le moyen de couplage (31) est monté de façon rotative sur le broyeur (30), et/ou
b. le moyen de couplage (31) présente une première partie de couplage (310) qui, lors du couplage du récipient de réception (4) avec le broyeur (30), peut être mise en contact, en particulier direct, avec le récipient de réception (4).

4. Dispositif de broyage de denrées alimentaires (3) selon l'une quelconque des revendications précédentes, **caractérisé en ce que** le dispositif de broyage de denrées alimentaires (3) peut être couplé sur un premier côté au récipient de réception (4) et sur un deuxième côté, en particulier opposé au premier côté, à l'unité d'entraînement (2).

5. Dispositif de broyage de denrées alimentaires (3) selon l'une quelconque des revendications précédentes, **caractérisé par** un élément de serrage (35) relié au moyen de couplage (31), qui, après un découplage du récipient de réception (4) du broyeur (30), provoque un mouvement de retour du moyen de couplage (31) de la première position à la deuxième position.

6. Dispositif de broyage de denrées alimentaires (3) selon l'une quelconque des revendications précédentes, **caractérisé par** une unité de coupe (32), qui présente un arbre d'entraînement (320) et au moins un moyen de coupe (321) assemblé, en particulier directement, à l'arbre d'entraînement (320), dans lequel l'arbre d'entraînement (320) peut être couplé par son extrémité opposée au moyen de coupe (321) à l'unité d'entraînement (2).

7. Système avec un dispositif de broyage de denrées alimentaires (3) selon l'une quelconque des revendications précédentes et
a. un récipient de réception (4) pouvant être couplé au dispositif de broyage de denrées alimentaires (3), et/ou
b. une unité d'entraînement (2) pouvant être couplée au dispositif de broyage de denrées alimentaires (3).

8. Système selon la revendication précédente, **caractérisé en ce que**, lors d'un couplage du récipient de réception (4) au dispositif de broyage de denrées alimentaires (3), le récipient de réception (4) transfère le moyen de couplage (31) dans la première position.

9. Système selon une des revendications 7 ou 8, **caractérisé en ce que**:
a. l'unité d'entraînement (2) présente un logement pour le dispositif de broyage de denrées alimentaires (3), dans lequel le dispositif de broyage de denrées alimentaires (3) peut être introduit, en particulier directement, dans le logement, indépendamment de la position du moyen de couplage (31) et/ou
b. un entraînement automatique de l'unité d'entraînement (2) indépendamment de la position du moyen de couplage (31) ne peut pas être effectué.

10. Système selon l'une quelconque des revendications 7 à 9, **caractérisé en ce que** le dispositif de broyage de denrées alimentaires (3) ferme une ouverture de récipient du récipient de réception (4).

11. Système selon l'une quelconque des revendications 7 à 10, **caractérisé en ce que** l'unité d'entraînement (2) présente au moins un élément de commutation mobile (20), qui est en contact avec le moyen de couplage (31) exclusivement lorsque celui-ci se trouve dans la première position.

12. Système selon l'une quelconque des revendications 7 à 11, **caractérisé en ce que**, lors d'un déplacement du dispositif de broyage de denrées alimentaires (3) le long de son axe central (M), en particulier en direction de l'unité d'entraînement (2), l'élément de commutation (20) bascule d'une position de déconnexion à une position de connexion, dans laquelle l'unité d'entraînement (2) entraîne l'unité de coupe (32).

13. Système selon l'une quelconque des revendications 7 à 12, **caractérisé en ce que** l'élément de commutation (20) est couplé à un moyen de serrage, qui déplace, en particulier automatiquement, l'élément de commutation (20) de la position de connexion à la position de déconnexion.

14. Système selon l'une quelconque des revendications 7 à 13, **caractérisé en ce que** l'unité d'entraînement (2) présente un moyen de fixation, en particulier un assemblage à baïonnette pour la fixation détachable du dispositif de broyage de denrées alimentaires (3) dans l'unité d'entraînement (2), lorsque l'élément de commutation (20) se trouve dans la position de connexion.

15. Ensemble composé d'une multiplicité de dispositifs de broyage de denrées alimentaires (3) selon l'une quelconque des revendications 1 à 6 et d'une multiplicité de récipients de réception (4), **caractérisé en ce que**:
a. au moins un dispositif de broyage de denrées alimentaires (3) est associé à chaque récipient de réception (4), et/ou
b. un diamètre extérieur (AV, AG) d'une partie (40) du récipient de réception (4) pouvant être couplée au dispositif de broyage de denrées alimentaires (3) est égal à un diamètre intérieur d'un évidement de broyeur d'au moins un de la multiplicité des dispositifs de broyage de denrées alimentaires (3).
